Europäisches Patentamt

(19) European Patent Office (11) Publication number: **0 058 569**
Office européen des brevets **A2**

(12) **EUROPEAN PATENT APPLICATION**

(21) Application number: **82300804.0**

(22) Date of filing: **17.02.82**

(51) Int. Cl.³: **B 23 K 15/00**

(30) Priority: **18.02.81 US 235399**

(43) Date of publication of application:
**25.08.82 Bulletin 82/34**

(84) Designated Contracting States:
**CH DE FR GB IT LI**

(71) Applicant: **THE BABCOCK & WILCOX COMPANY**
**1010 Common Street P.O. Box 60035**
**New Orleans Louisiana 70160(US)**

(72) Inventor: **Davis, Thomas L.**
**8222 Ruble Street**
**Louisville Ohio 44641(US)**

(72) Inventor: **Ayres, Paul S.**
**1657 Denwood Street**
**Alliance Ohio 44601(US)**

(74) Representative: **Cotter, Ivan John et al,**
**D. YOUNG & CO. 10 Staple Inn**
**London WC1V 7RD(GB)**

(54) Methods of preparing multimetal extrusion billets.

(57) A method of preparing a multimetal extrusion billet comprises nesting an inner billet member (10) composed of one metal inside an outer billet (20) member composed of another metal, the ends of the nested billet members (10, 20) being welded together using an electron beam (44) generated by an electron gun (42) in a vacuum chamber (40).

FIG. 3

1

## METHODS OF PREPARING MULTIMETAL EXTRUSION BILLETS

This invention relates to methods of preparing multimetal billets, i.e. extrusion billets comprising more than one metallic component, which are to be co-extruded into a multimetal product.

There are many uses for multimetal products, i.e. products which are composed of layers of different metals or metal alloys. (Henceforth, the word "metals" will include metal alloys.) One typical use for such a multimetal product is tubing.

The environment on the inside of a tube is often very different from the environment on the outside of the tube. One metal may have properties which make it acceptable for use on the tube inside but unacceptable for use on the tube outside, and vice-versa. Sometimes a certain metal may be acceptable for use on both the inside and outside of a tube but may be very costly and really not necessary on both the inside and outside. There may be still other situations in which a tube must have three components, e.g. a first metal on the tube inside for one type of environment; a second metal on the tube outside for another and different type of environment; and a third metal situated between the first two in order to provide the necessary structural strength.

It is usually necessary and/or desirable to have the various layers of metal bonded to one another so that the multimetal product maintains its structural and physical integrity during use. Multimetal tubing, for example, is often used in circumstances in which it must physically act as if it were one solid piece of tubing. Under such circumstances, it would not be permissible to have one layer of material expanding and actually moving with respect to another layer.

Various methods of bonding the metal layers together have been attempted with varying degrees of success. In general, a metallurgical bond between the metal components is more acceptable and satisfactory than a mechanical bond. One commonly used method of creating a metallurgical bond between the several metals of a multimetal product is through co-extrusion.

In general terms, extrusion is a process by which an article called an extrusion billet is forced to pass, i.e. is squeezed, through a die. In co-extrusion, the several metals of which the multimetal product will be made, i.e. the billet members, are placed adjacent to each other and are held together as they are simultaneously squeezed through a die.

The quality of the metallurgical bond between the several metals produced by this method depends greatly upon the condition of the billet members prior to the co-extrusion. Such conditions as the cleanliness and finish of the surfaces of the billet members are important factors.

Another important factor is the method used to hold the billet members together prior to and during the actual co-extrusion process. The billet members should be held together so that they can be treated as if they were actually a single-metal billet. For example, the billet members should be held together in such a way that they can be heat-treated prior to being co-extruded without undue concern for the different rates of thermal expansion of the different metals.

Additionally, for purposes of economy, the billet members should be held together prior to co-extrusion in such a fashion as to take advantage of existing machinery and techniques which are currently used for extruding single-metal products. This is especially important when the machinery being used to co-extrude is designed to handle solid core billets. With this type of equipment, the solid core billet undergoes a "reverse extrusion" to create a hollow core billet prior to being extruded into the finished product. In the context of a multimetal billet, this means that the billet members must be held fast together while the middle of the solid, inner billet member is "pushed out".

Currently used methods of preparing the billet members prior to co-extrusion often result in a poor metallurgical bond in the finished multimetal product. This is thought to result from inadequate cleaning of the surfaces of the billet members to be mated as well as the formation of bond-inhibiting oxide layers on said surfaces during the heat treatment which precedes the co-extrusion. Other presently used methods of preparing the billet members for co-extrusion are disadvantageous because they are very costly, require special heat treatment of the billet members prior to co-extrusion, and/or are not compatible with existing extrusion machinery and techniques, especially those utilizing a solid core billet.

According to the present invention there is provided a method of preparing multimetal extrusion billets, characterised by the steps of:

(a)      nesting at least one inner billet member inside an outer billet member,

(b)      placing the billet members in a vacuum chamber, and then

(c)      welding together the ends of the billet members using electron beam welding under vacuum.

An embodiment of the invention disclosed hereinbelow comprises an improved method of preparing multimetal extrusion billets prior to co-extrusion which can at least partially overcome many of the problems described above. Electron beam welding in a vacuum is used to join the ends of the billet members. The disclosed method also comprises steps of finishing and cleaning bonding surfaces of the billet members. Through the method disclosed, a multimetal billet is formed which can be handled and treated as economically as a single-metal billet and which results in a good metallurgical bond between the different metals in the co-extruded multimetal product.

The invention will now be further described, by way of illustrative and non-limiting example, with reference to the accompanying drawings, in which:

Figure 1 is an elevational view, partially cut away, of an inner billet member;

Figure 1A is an elevational view, in section, of an outer billet member;

Figure 2 is an elevational view, in section, of the inner and outer billet members in a nested position;

Figure 2A is an end view of what is shown in Figure 2;

Figure 3 is an elevational view, partly in section, of a vacuum chamber in which is housed an electron beam gun and a device for supporting the nested billet members during welding;

Figure 4 is an elevational view, in section, of an inner and outer billet member in the nested position after having been welded together at the ends by electron beam welding;

Figure 4A is an end view of what is shown in Figure 4;

Figure 5 is an end elevational view, in section, of loosely fitting inner and outer billet members in the nested position; and

Figure 6 is an end elevational view, in section, of the billet members shown in Figure 5 after they have been tack welded prior to being welded together by electron beam welding.

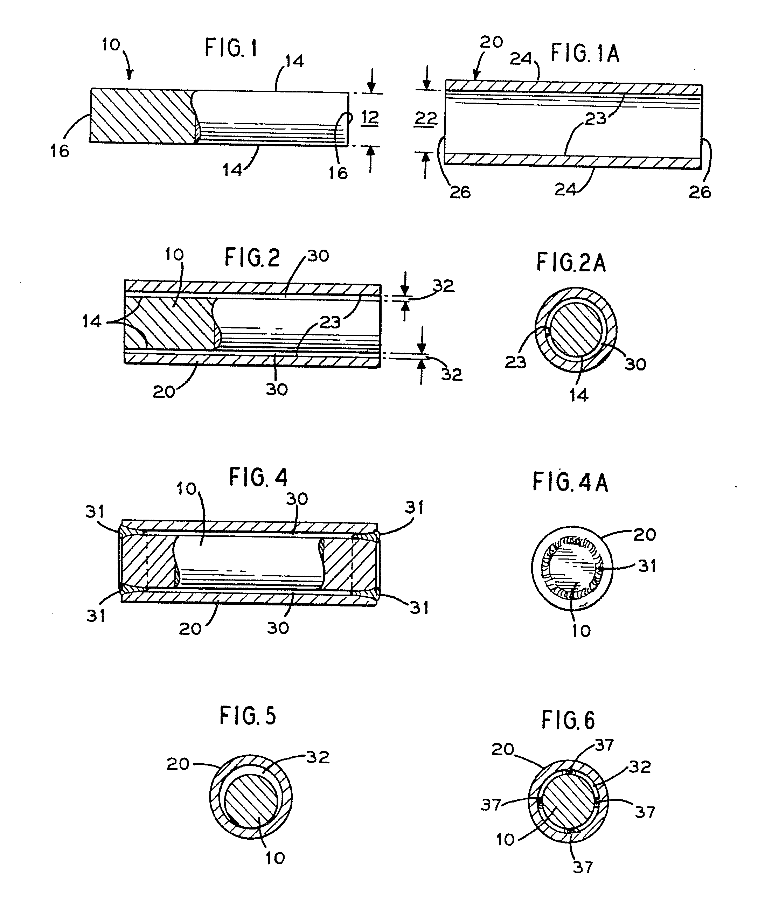

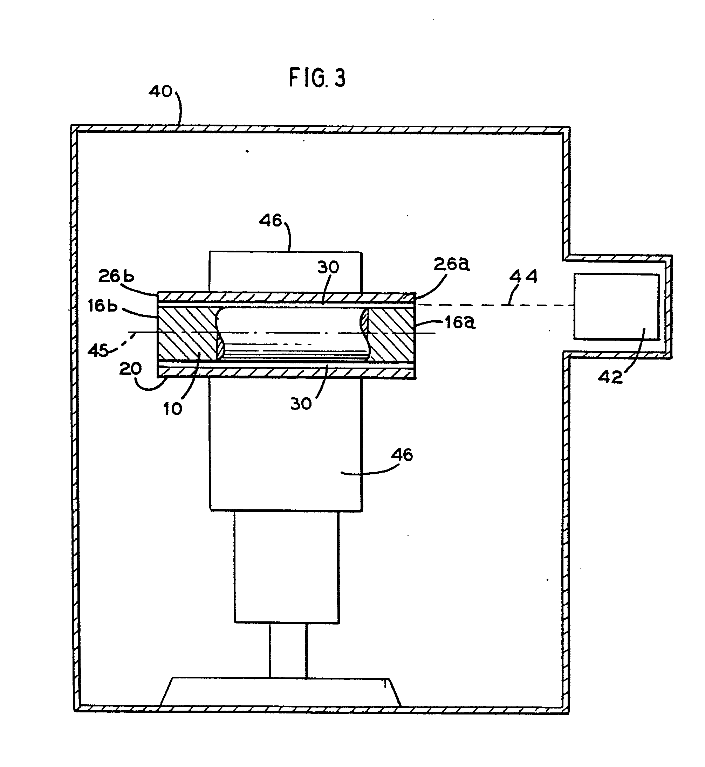

Figures 1 and 1A show an inner billet member 10 and an outer billet member 20. The billet members are shown as being cylindrically shaped, the member 10 being solid and the member 20 being tubular. The ouside diameter 12 of the inner billet member 10 and the inside diameter 22 of the outer billet member 20 are such that the inner billet member 10 can be inserted or "nested" inside the outer billet member 20 as shown in Figures 2 and 2A. The billet members 10 and 20 are of substantially equal length.

The billet member 10 has an outer surface 14 and ends 16. The billet member 20 has an inner surface 23, an outer surface 24 and ends 26. In the nested position shown in Figures 2 and 2A, the surface 14 and the surface 23 are located immediately adjacent one another and define an interface 30 between the billet members 10 and 20. Thus, the surface 14 is known as the interface surface of the billet 10 and the surface 23 is known as the interface surface of the billet 20. The interface 30 has an interface clearance 32 which is equal to one half of the difference between the outside diameter 12 of the member 10 and the inside diameter 22 of the member 20.

Figure 3 shows a vacuum chamber 40 and a member 42 which can emit a beam of electrons 44. The member 42 is commonly called an electron beam gun. In carrying out methods embodying the present invention the inventors have used a vacuum chamber and electron beam gun manufactured by Electron Research Incorporated and identified as serial no. 759.

Located inside the vacuum chamber 40 is a member 46 which serves as a means for supporting the nested billet members 10 and 20. The member 46 also serves as a means for rotating the nested billet members 10 and 20 about the centreline 45 of the nested billet members. The member 46 supports the billet members 10 and 20 at a location in the vacuum chamber 40 such that the beam of electrons 44 strikes the interface 30.

While the electron beam is striking the interface 30, the member 46 rotates the billet members 10 and 20 around their centreline 45, thereby allowing the electron beam to weld along the entire periphery of the interface 30. This welds together ends 16a and 26a of the billet members 10 and 20, respectively, facing the electron beam gun 42. The billet members 10 and 20 are then revolved through 180 degrees so that the welding process described above may be repeated to weld their other ends 16b and 26b together. The electron beam welding is performed under vacuum conditions.

Instead of revolving the billet members 10 and 20 through 180 degrees to weld the ends 16b and 26b together, a second electron beam gun 42 could be employed to weld the ends 16b and 26b while the first mentioned electron beam gun 42 is welding the ends 16a and 26a. Additionally, although Figure 3 shows that the electron beam welding process is performed in a horizontal position, the gun 42, billet members 10 and 20 and the member 46 could be positioned such that the electron beam welding process takes place in other positions, for instance in the vertical position.

Figure 4 shows the billet members 10 and 20 after the welding process has been completed, the resulting welds being designated by the numeral 31. The welded billet members 10 and 20 depicted in Figure 4 are referred to as one multimetal extrusion billet. The multimetal extrusion billet shown in Figure 4 can be treated as if it were a single-metal extrusion billet and is ready to go through an extrusion process to become a multimetal product.

In a preferred embodiment of the invention, the inner billet member 10 is nested inside the outer billet member 20 and the nested billet members are then place in the vacuum chamber 40. However, the nesting step could be performed after the step of placing the billet members in the vacuum chamber 40. Also, while in the preferred embodiment the electron beam 44 is maintained stationary and substantially parallel to the interface 30 while the nested billet members 10 and 20 are rotated, it is instead possible for the billet members to be held stationary while the electron beam gun 42 is moved so as to weld along the entire periphery of the interface 30.

In the preferred embodiment, the following steps are taken to prepare the surfaces of the billet members 10 and 20 prior to the nesting step. The interface surfaces 14 and 23 are machined to a finish of 3.8 microns (150 microinches) or less, the nominally desired finish being roughly in the range of 0.81 to 3.18 microns (32 to 125 microinches). The billet members 10 and 20 are sized so that the interface clearance 32 is 0.43 mm (0.017 in) or less, the nominally desired clearance being roughly between 0.13 and 0.38 mm (0.005 and 0.015 in).

Additionally, after the interface surfaces 14 and 23 have been machined to the desired finish, the surfaces 14 and 23 are cleaned prior to the nesting step. Several cleaning techniques may be employed. In one cleaning technique, the electron beam gun 42 is used at a diffuse beam setting to scan the interface surfaces 14 and 23 to remove contaminants.

In other cleaning techniques, the interface surfaces 14 and 23 are chemically cleaned prior to the nesting step. One such chemical cleaning technique involves the use of an alkaline cleaning solution. In this technique, the billet members 10 and 20 are submerged in a hot (71 to 82$^{\circ}$C (160 to 180$^{\circ}$F)) alkaline solution (Beaver Alkali BAP-2105 at 75 grams/litre (10 ounces/U.S. gallon)) and soaked for three to five minutes. The billet members 10 and 20 are then removed from the alkaline solution and submerged in a clean water rinse bath for one to three minutes at room temperature (21 to 27$^{\circ}$C (70 to 80$^{\circ}$F)) during which time the interface surfaces 14 and 23 are scrubbed. Finally, the billet members 10 and 20 are removed from the clean water rinse and immediately wiped dry.

In another chemical cleaning technique, hydrocarbon-based solvents are used to clean the interface surfaces 14 and 23. This cleaning technique includes sequentially wiping the interface surfaces 14 and 23 with stabilised 1,1,1 - Trichloroethane, then methanol and finally acetone.

Regarding the step of welding the ends of the billet members 10, 20 together using electron beam welding under vacuum, the following are conditions under which the inventors tested the invention and obtained satisfactory results:

| VARIABLE | MOST DESIRABLE VALUE | RANGE TESTED |
|---|---|---|
| (1) Electron Beam Setting | | |
| Voltage | 55kV | 55kV |
| Current | 185mA | 95 to 200 mA |
| Deflection Path | Circular | Circular |
| Deflection Amplitude (dial setting) | 10 | 10-15 |
| Deflection Frequency | 200Hz | 200Hz |
| (2) Vacuum Level (Torr) | $1 \times 10^{-4}$ or less | $1 \times 10^{-4}$ or less |
| (3) Gun-to-Work Distance | 279 mm (11in) | 178 to 279 mm (7 to 11 in) |
| (4) Welding speed | 635mm/min (25in/min) | 635 to 1524mm/min (25 to 60in/min) |
| (5) Electron Beam Offset | 0 | 0 to 0.25 mm (0 to 0.010 in) |

It should be noted that if the interface clearance 32 is at the higher end of the desired range, e.g. around 0.43 mm (0.017 in), a loose fit between the adjacent, nested billet members 10 to 20 may result. Under such conditions, it may be observed that the interface clearance 32 is not uniform around the entire periphery of the interface 30, particularly when the nested billet members 10, 20 are horizontally disposed: see, for example, Figure 5. This lack of uniformity is not a desirable condition for electron beam welding. To correct this, the ends of the adjacent billet members 10, 20 may be temporarily tack welded together prior to the step of electron beam welding in such a way as to keep the interface clearance 32 consistent around the entire periphery of the interface 30. See for instance, Figure 6, in which the tack welds are designated by the numeral 37.

Although Figure 4 depicts a bimetallic extrusion billet, it is to be understood that the method disclosed above may be used in preparing a billet comprising more than two metals. The above-disclosed method is merely repeated for each additional interface that is present in the multimetal billet. Furthermore, while Figures 1 to 6 show an inner billet member 10 which is solid, the above-disclosed method could also be used where the inner billet member is hollow.

**0058569**

Similarly, although Figures 1 to 6 show cylindrically shaped billet members, it is to be understood that the above-disclosed method can be utilised to prepare multimetal extrusion billets of various shapes.

## CLAIMS

1.     A method of preparing multimetal extrusion billets, characterised by the steps of:

   (a)     nesting at least one inner billet member (10) inside an outer billet member (20),

   (b)     placing the billet members (10, 20) in a vacuum chamber (40), and then

   (c)     welding together the ends of the billet members (10, 20) using electron beam welding under vacuum.

2.     A method according to claim 1, wherein the welding step includes directing, at both ends of the nested billet members (10, 20), a beam of electrons (44) along the entire periphery of an interface (30) between the billet members.

3.     A method according to claim 2, wherein the beam of electrons (44) is maintained in a stationary position which is substantially parallel to the interface (30) between the nested billet members (10, 20) and the nested billet members are moved in relation to the beam.

4.     A method according to claim 1, claim 2 or claim 3, wherein the billet members (10, 20) are of substantially equal length.

5.     A method according to any one of the preceding claims, wherein surfaces (14, 23) of the billet members (10, 20) that face one another when the members are nested are machined to a finish of 3.8 microns or less prior to the step of nesting.

6.     A method according to any one of the preceding claims, wherein the billet members (10, 20) are sized so that, when nested, the clearance (32) between the billet members is 0.43 mm or less.

7.     A method according to any one of the preceding claims, including the step of chemically cleaning, prior to the nesting step, the surfaces (14, 23) of the billet members (10, 20) that will face one another after nesting of the members.

8.    A method according to claim 7, wherein the step of chemically cleaning said surfaces (14, 23) of the billet members (10, 20) comprises wiping the surfaces with hydrocarbon-based solvents including 1,1,1-Trichloroethane, methanol, and acetone.

9.    A method according to claim 7, wherein the step of cleaning said surfaces (14, 23) of the billet members (10, 20) is performed using an alkaline cleaning solution.

FIG.1

FIG.1A

FIG.2

FIG.2A

FIG.4

FIG.4A

FIG.5

FIG.6

FIG. 3